# EUROPEAN PATENT APPLICATION

(11) **EP 0 668 686 A1**
(43) Date of publication of application: **23.08.1995**
(21) Application number: 95200364.8
(22) Date of filing: 15.02.1995
(51) Int. Cl.: H04M 9/02, H04M 1/72, H04B 3/54, H04Q 5/02

(54) **Home telephone system**

(30) Priority: 17.02.1994 NL 9400239
(71) Applicant: GRID Telecom Systems B.V., NL-2625 KP Delft (NL)
(72) Inventor: Bijl, Jacobus Cornelis, NL-2586 KH 's-Gravenhage (NL); Jongen, Jacobus Johannes Hubertus Hendrikus, NL-2552 HM 's-Gravenhage (NL); Keijzer, Hendrik Willem, NL-2361 EE Warmond (NL); Smeets, Johannes Cornelis Josephus, NL-2625 KP Delft (NL)
(74) Representative: Iemenschot, Johannes Andreas, Ir.

(57) **Abstract**

A home telephone system, comprising a central unit (2), to be connected to a telephone line (1) of a public exchange or a PABX, and a number of interface units (4) to which telephone sets (5), an answering machine (6) and a FAX machine (7) can be connected, the central unit (2) and the interface units (4) being connected by a transmission channel (3), being the power line, a radio link, a two-wire telephone cable, or a plurality of two-wire telephone cables the central unit (2) containing a ring detection circuit (8) to be connected to the exchange line (1), a switching unit (9) for seizing the exchange line (1), a hybrid circuit (10) for splitting and combining the audio signals coming from the exchange line (1) and going to the exchange line (1), a switching unit (11) for switching audio signals, a tone generator circuit (13) for sending tones to the exchange line (1) or to the transmission channel (3), a tone detection circuit (14) for detection of FAX Calling tones coming from the exchange line (1), a DTMF receiver (16), a microprocessor (17) and an interface circuit (12) for interfacing to the transmission channel (3), and each interface unit (4) containing at least an interface circuit (18) to the transmission channel (3), a switch unit (19) and a microprocessor (20). According to the invention in the central unit (2) there are further provided an audio recording and reproduction unit (15) for the reproduction of an audio message to the exchange line (1) and audio paging messages to the transmission channel (3), and the interface units (4) further contain loudspeakers for outputting said audio paging messages from the transmission channel (3), all built and interconnected in such a way that ringing signals can be detected, the exchange line (1) can be seized, a FAX Calling tone on the exchange line (1) can be detected, DTMF signals on the exchange line (1) can be detected, a recorded message can be reproduced on the exchange line, one or more telephone apparatus (6, 7), can be called, recorded audio paging messages can be sent to the interface units (4), and impulse signals generated by the telephone apparatus (5, 6, 7) can be re-generated by the system on the exchange line (1).

Method of handling an incoming call by a home telephone system.

## Description

The invention relates to a home telephone system, comprising a central unit, to be connected to a telephone line of a public exchange or a PABX, and a number of interface units to which telephone sets, an answering machine and a FAX machine can be connected, the central unit and the interface units being connected by the cabling of the power line, to which the interface units are connected in parallel, and the central unit containing a ring detection circuit to be connected to the exchange line, a switching unit for seizing the exchange line, a hybrid circuit for splitting and combining the audio signals coming from the exchange line and going to the exchange line, a microprocessor and a modulator/demodulator unit for interfacing to the power line, and the modulator/demodulator unit containing an FM modulator circuit and an FM demodulator circuit, and each interface unit containing at least an FM modulator circuit, an FM demodulator circuit and a microprocessor

The use of small telephone exchanges in homes is increasing more and more. Often, such an exchange is, with regard to the functionality, a derivative of the well known PABX as it is used in medium and large companies.

Of the usual PABX functions, only a few are important for use in homes. One can think of features like direct dial-in and the automatic routing of FAX calls to the FAX machine. With direct dial-in in PABX systems, the call is directly routed to the telephone set selected by the caller. In the home however, it is often required to contact a person in the house, rather than a specific telephone set.

Known is a system called "distinctive ringing", which system is offered in the United States of America by various telephone companies. In this system two or three telephone numbers are allocated to one telephone line. Dependent on the number dialled, the telephone sets in the house ring with a rhythm, dependent on the number dialled. It is also known that some people have problems to distinguish the different rhythms, so that an effective call to a specific person is not always possible.

The present invention has for object to offer a solution for the problems mentioned before, using interface units containing a loudspeaker for paging the person that is wanted on the telephone with a spoken paging message.

The invention has several basic implementation forms: one that uses the power line cabling as a single bi-directional channel between the central unit and the interface units, a second one in which the central unit and the telephone sets are connected using a radio link, and a third one in which a single pair of wires is used on the secondary side of the central unit to connect the telephones. In the latter case, this pair of wires can be the existing telephone cabling in the house. It is also possible to implement the invention in a system where the interface units are connected to the central unit by means of individual two-wire cables as in known small home telephone systems or as in PABX systems.

In all implementations incoming calls are handled by the system in the same manner, and where necessary and possible routed to one or more telephone sets. Also for outgoing calls there is no difference in functionality for the user between the different implementations of the invention.

Thus, the invention relates to a home telephone system of the type mentioned in the beginning characterized in that in the central unit there are further provided an audio recording and reproduction unit for the reproduction of an audio welcome message to the exchange line and audio paging messages to the transmission channel and the interface units further contain loudspeakers for outputting said audio paging messages from the transmission channel, all built and interconnected in such a way that ringing signals on the exchange line can be detected, the exchange line can be seized, a FAX Calling tone on the exchange line can be detected, DTMF signals on the exchange line can be detected, an audio welcome message, recorded in the recording and reproduction unit can be reproduced on the exchange line, one or more telephone apparatus, can be called, audio paging messages, recorded in the recording and reproduction unit can be sent via the transmission channel to the interface units, where they are output through a loudspeaker, after the receiver of one of the telephone apparatus has been lifted an audio connection between the exchange line and that telephone apparatus can be established, and impulse signals generated by the telephone apparatus can be re-generated by the system on the exchange line.

The invention will hereafter be explained using the drawings.
Fig. 1 shows the general setup of the system;
Fig. 2 shows a the central unit in more detail;
Fig. 3 shows the interface unit in detail and
Fig. 4 shows the variants of the interface circuits on the central unit and the interface unit sides, dependent on the transmission channel used.

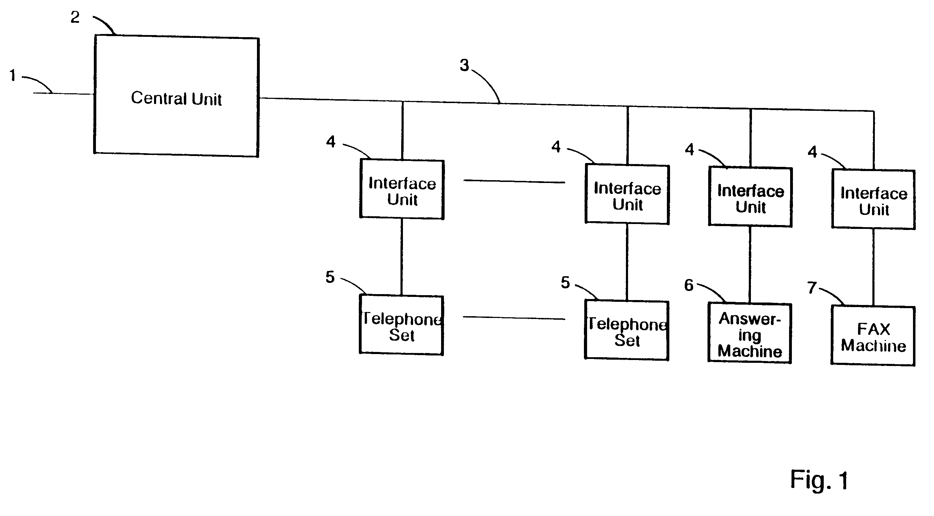

Referring to figure 1, the general setup of the system will now be described.

The central unit 2 is on one side connected to the public exchange by means of exchange line 1 and on the other side, via cabling 3, connected to the interface units 4, to which in turn telephone sets 5, an answering machine 6 and a FAX machine 7 are connected.

The central unit 2 and the interface units 4 can exchange messages. The messages are transferred by means of series of bits that are modulated in the audioband. In the case where the transmission channel 3 is two-wire telephone line cabling, also the DC current status of the cabling is used for information transfer.

The central unit 2 can transmit both addressed and unaddressed messages. Addressed messages are only recognized by those interface units 4 of which the address corresponds with the address contained in the message. Unaddressed messages are recognized by all interface units 4.

The interface units 4 can only transmit messages which are destined for the central unit 2. The messages from the interface unit 4 contain the address of that interface unit 4, so that the central unit 2 can recognize from which interface unit 4 the message originates.

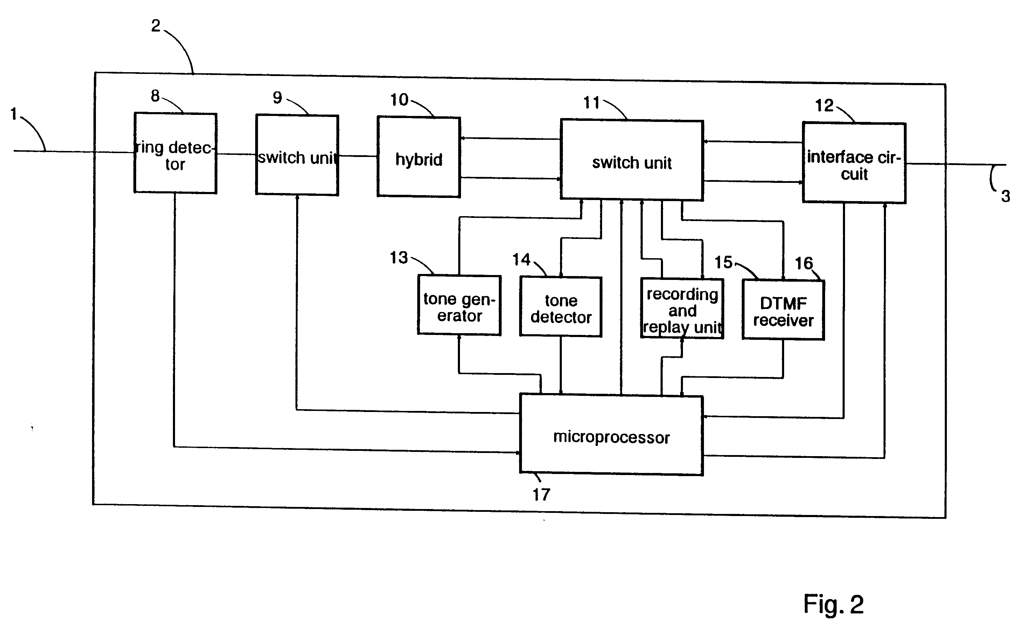

Figure 2 shows in more detail the central unit 2. The following parts can be distinguished: a ring-signal detector 8, a switching unit 9 for seizing the exchange line 1, a hybrid circuit 10, a switching unit 11, a modulator/demodulator unit 12 for interfacing with the cabling 3, a tone generator 13, a tone detector 14, an audio recording and reproduction unit 15 containing an audio memory, a DTMF receiver 16 and a microprocessor 17 containing a software program, all this built and interconnected in such a way that the procedures for incoming and outgoing calls decribed below, can be executed under the control of the microprocessor 17.

The ring-signal detector 8 transforms the ring-signal present on the exchange line into a signal level acceptable for the microprocessor 17. Dependent on the implementation of the ring-signal detector 8 and on the software in microprocessor 17, the signal output by the ring-signal detector is the envelope of the incoming ring-signal, or the original ring signal adapted in voltage level. In this latter case, it is the task of the software in the microprocessor to detect a valid ring-signal on the exchange line 1, for example on the basis of the time between two zero-crossings of the signal.

Under the control of the microprocessor 17 switching unit 9 can seize or release exchange line 1. Furthermore in switching unit 9 the audio signals coming from and going to the hybrid circuit 10 are separated from the DC on the exchange line 1.

The function of the hybrid circuit 10 is to separate the audio signals coming from the exchange line 1 from the audio signals coming from the sets.

The purpose of the switching unit 11 is to connect or disconnect the audio signals from the exchange line side to or from the secundary side of the system, to insert signals generated by the system and to extract signals to be received by the system.

The purpose of tone generator 13 is to generate audio tones to be injected into the audio connection. The tones can be injected by means of switch unit 11 into the signal from the exchange line 1 to the interface circuit 12, or into the signal from the interface circuit 12 to the exchange line 1.

The purpose of the tone detector 14 is to recognise audio signals with a single stable frequency and transfer them to microprocessor 17. Depending on the embodiment, tone detector 14 can output the envelope of the signal received to microprocessor 17, or tone detector 14 can only convert the audio signal into levels acceptable for microprocessor 17. In the latter case, software in microprocessor 17 is to detect whether a correct frequency and envelope are received, for example by measuring the time between two zero-crossings.

In the audio recording and reproduction unit 15 voice messages can be recorded. Under the control of microprocessor 17, and after the setting by microprocessor 17 of the correct switches in the switching unit 11, an audio signal is recorded or reproduced. The signal to be recorded, in the application of the system disclosed here, originates from an apparatus 5, 6 or 7, via interface units 4, the transmission channel 3 and the interface circuit 12. Depending on the technical implementation of the switching unit 11 and the setting therof controlled by microprocessor 17, the audio-signal may also, however, originate from exchange line 1. The audio signal reproduced may, depending on the setting of the switching unit 11 determined by microprocessor 17, be sent to exchange line 1 or to an apparatus 5, 6 or 7.

The purpose of DTMF receiver 16 is to receive tone dial signals either from the exchange line 1 or from an apparatus 5, 6 or 7, all this depending on the setting of the switches of switching unit 11 by microprocessor 17.

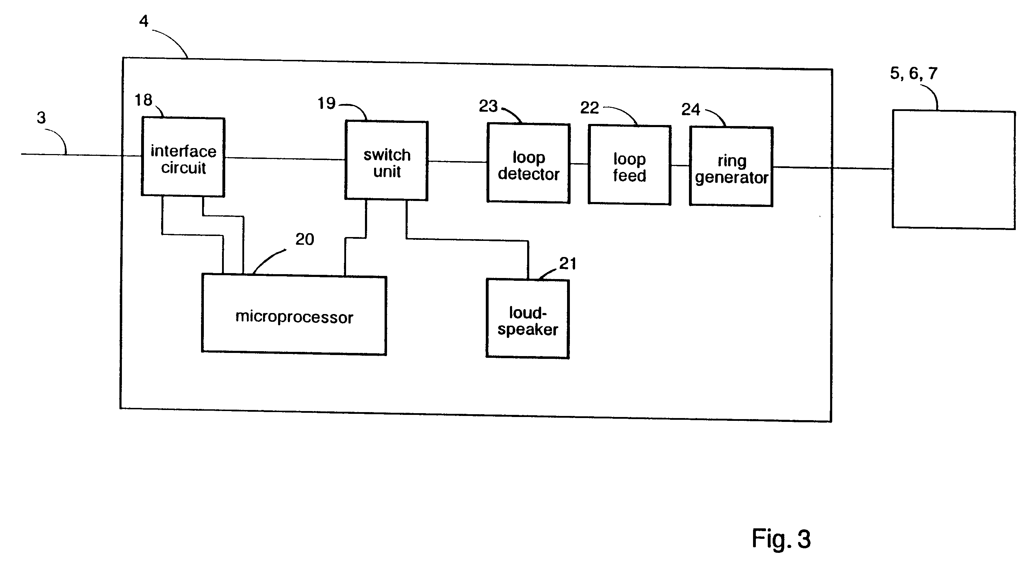

Figure 3 shows the details of the interface unit 4. Shown are the following components: an interface circuit 18 for interfacing the interface unit 4 with the transmission channel 3, a loop detector 23, a switch unit 19 for switching audio signals to and from, and DC signals to the telephone apparatus 5, 6 or 7, a microprocessor 20 and a loudspeaker 21. In the case that the transmission channel 3 is the power line or a radio link the interface unit 4 further contains a loop current feed circuit 22 and a ringing signal generator 24.

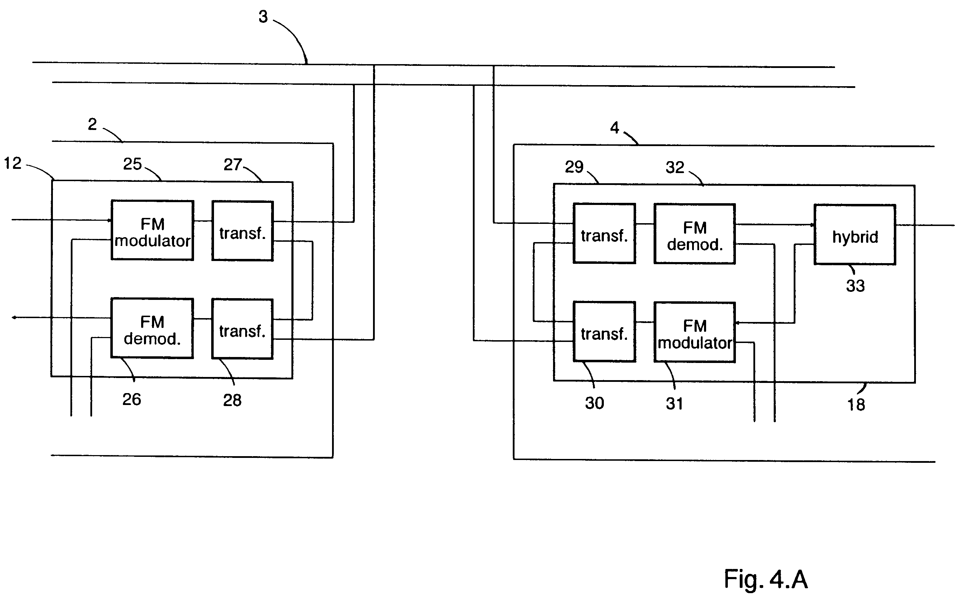

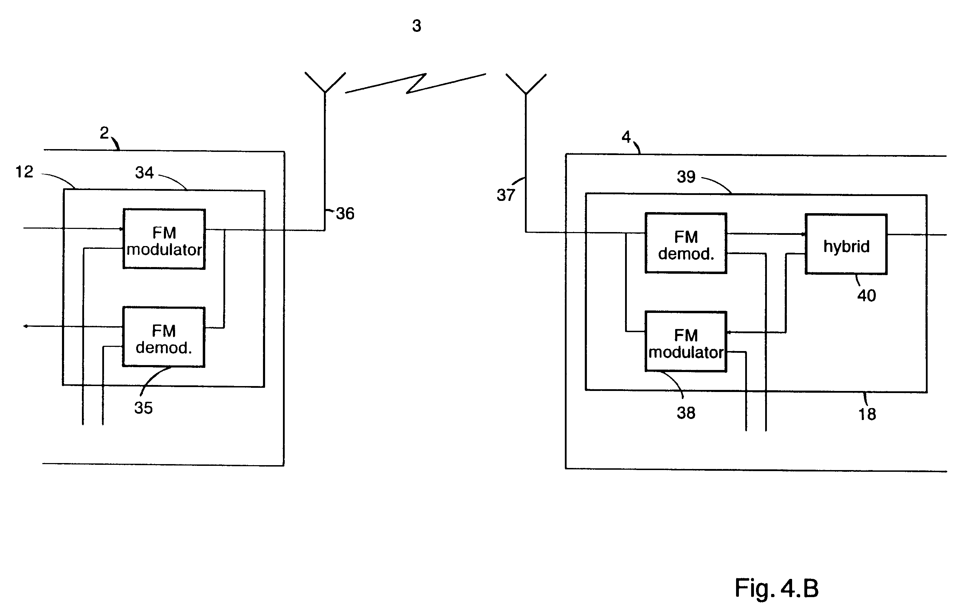

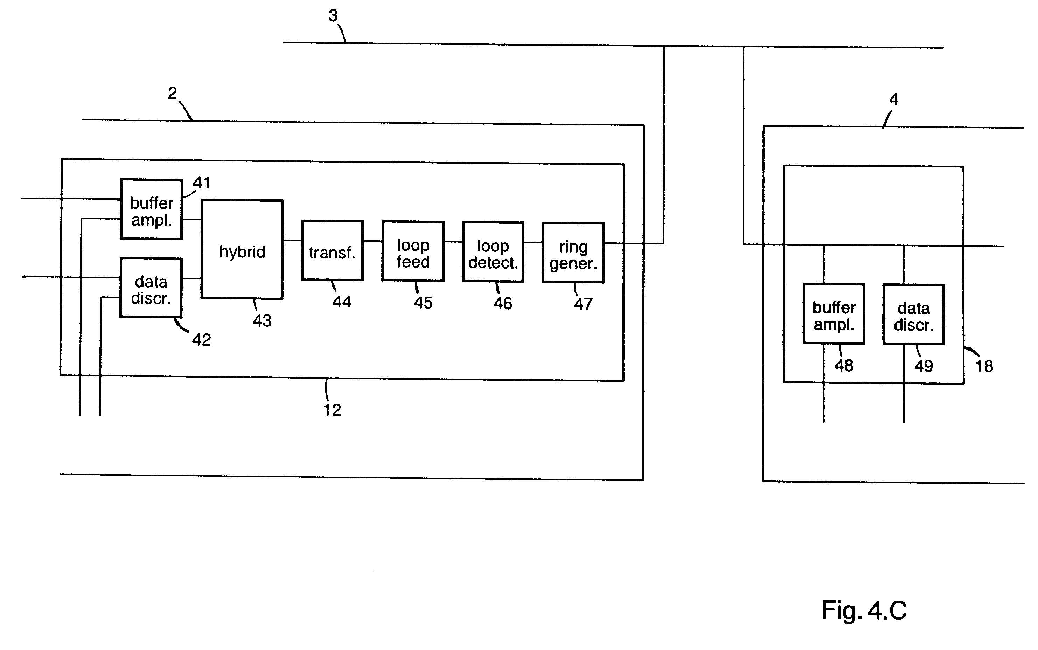

Several variants of the interface circuits 12 and 18, depending on the type of the transmission channel 3 to the interface units 4, are shown in figure 4.

Figure 4A shows the case in which the transmission channel 3 is the power line. The interface circuit 12 in the central unit 2 contains an FM modulator circuit 25, an FM demodulator circuit 26, and two transformers 27 and 28. The interface circuit 18 in the interface unit 4 contains two transformers 29 and 30, an FM modulator circuit 31, an FM demodulator circuit 32 and a hybrid circuit 33.

Figure 4B shows the case in which the transmission channel 3 is a radio link. The interface circuit 12 in the central unit 2 contains an FM modulator 34, an FM demodulator circuit 35 and a transmitting/receiving antenna 36. The interface circuit 18 in the interface unit 4 contains a combined transmitting/receiving antenna 37, an FM modulator 38, an FM demodulator 39 and a hybrid circuit 40.

Figure 4C shows the case in which the transmission channel 3 is a single two-wire cable to which the interface units are connected in parallel. The interface circuit 12 in the central unit 2 contains a buffer amplifier 41 for inserting bitstreams into the audio signal to the interface units 4, a data discriminator 42 for extracting bitsteams from the audio signal from the interface units 4, a hybrid circuit 43 for splitting and combining the audio signals to and from the interface units 4, a transformer 44, a loop feeding circuit 45, a loopcurrent and ringtrip detector 46 and a ring-signal generator 47. The interface circuit 18 in the interface unit 4 contains a buffer amplifier 48 and a data discriminator 49.

It will be clear that with advantage the interface units can be incorporated in the telephone apparatus 5, 6 or 7. This is especially so when the transmission channel 3 is a radio link.

The following procedure descriptions describe the operation of the system, independent of the variant of the transmission channel 3 used. With the explanation above of three implementation forms of the system, it will not be difficult for someone acquinted with the principles of telephony to make the appropriate "translation".

### Procedure for an outgoing call

In contrast with what is usual with the PABX systems, the user does not have to dial O or 9 first to make an outgoing call. The connection with the exchange line 1 is established immediately after lifting the receiver.

As soon as from one of the telephone apparatus 5, 6 or 7 the receiver is lifted, the loop detector 23 in the interface unit 4 to which the telephone apparatus 5, 6 or 7 is connected, detects this. Microprocessor 20 sends an off hook message via transmission 3 to microprocessor 17 in the central unit 2. In response to the off hook message the central unit 2 sends a confirmation message back. The interface unit 4 will now establish the connection between the telephone apparatus 5, 6 or 7 and the interface circuit 18 and the transmission channel 3 by operating switching unit 19.

Although the confirmation message is addressed to the interface unit 4 which detected the off hook situation, the message is for all other interface units 4 the signal to stop sending messages to the central unit 2 until they receive a release message. Between the confirmation message and the release message the interface units 4 are blocked and the telephone apparatus 5, 6 or 7 are disconnected by operating switch unit 19. If during this period the receiver is lifted of one of the connected telephone apparatus 5, 6 or 7, the interface unit 4 will not send an off hook message to the central unit 2.

After the confirmation message, sent by the central unit 2 in response to the off hook message sent by one of the interface units 4, the central unit 2 seizes the exchange line 1 and establishes the audio connection between the exchange line 1 and the transmission channel 3 by operating switch unit 11.

Now that there is a two-way audio connection between the exchange line 1 and the telephone apparatus 5, 6 or 7, via the central unit 2, the transmission channel 3 and the interface unit 4, the user of telephone apparatus 5, 6 or 7 can dial a number on the exchange line directly using DTMF signalling. In case the telephone apparatus is equipped for impulse dialling, the impulses are detected by the interface unit 4 in the case the transmission channel 3 is the power line or a radio link. Per impulse, the interface unit 4 sends a message to the central unit 2, where the impulse is re-generated on the exchange line 1. In the case the transmission channel 3 consists of a two-wire telephone cable, the impulses are also detected by the loopcurrent and ring-trip detector 323, figure 4C. In this case the interface unit does not have to send messages for each impulse.

When the user of an apparatus 5, 6 or 7 replaces the receiver on the hook, the interface unit 4 sends an on hook message to the central unit 2. On the receipt of this message the central unit 2 releases the exchange line 1 and confirms this by sending a release message to all interface units 4.

### Procedure for an incoming call

Incoming call without distinctive ringing.

Immediately after recognition of a valid ringing signal on the exchange line 1, irrespective of the rhythm, the call is answered by the central unit 2 by operating switch unit 9. At the same moment the tone detector 14 and the DTMF receiver 16 are connected to the exchange line 1 via switching unit 11. During a period of up to 4.5 seconds the system listens for a DTMF digit or a FAX Calling tone (CCITT CNG tone).

If a FAX Calling tone is detected, microprocessor 17 sends a ringing message to the interface unit 4 to which a FAX machine 7 is connected. The interface unit will switch on the ringing generator on the the connected FAX machine 7. In case the transmission channel 3 is a two-wire telephone cable, the central unit the ringing message signals the other interface units 4 to disconnect their telephone apparatus 5 or 6. After the message the central unit 2 generates the ringing signal from ring-signal generator 324. When one of the telephone apparatus 5, 6 or 7 answers the call, this is detected by interface unit 4, which sends an off hook message to central unit 2, or directly by the loopcurrent and ringtrip detector 323 in the central unit itself. The audio connection between the exchange line 1 and the transmission channel 3 is established.

If, instead of a FAX Calling tone, a DTMF digit is received, and the digit received is "linked" to a person in the house, the central unit 2 sends a page message to all interface units 4. The interface units 4 connect their loudspeakers 21 to the line via switching unit 19. After the page message, the interface unit 2 starts the recording and replay unit 15 to reproduce an audio paging message via the transmission channel 3 to the interface units 4. If the DTMF digit is "linked" to the answering machine 6 or to the FAX machine 7, the answering machine 6 or the FAX machine 7 is called with a ringing signal in the same way as described before after detection of the FAX Calling tone. When one of the telephone apparatus 5, 6 or 7 answers the call, after paging or ringing, the same procedure is followed as described before.

If neither a FAX Calling Tone, nor a DTMF digit is received, the tone generator 14 is removed from the line. The DTMF receiver 16 remains connected to the line, however. The recording and reproduction unit 13 is connected to the line and is ordered by microprocessor 17 in the central unit 2 to reproduce the audio "welcome" message stored therein. The caller now hears the welcome message and may as yet make a selection by sending a DTMF digit. If the caller makes a selection "linked" to a person, that person is paged. If the caller makes a selection "linked" to the answering machine 6 or the FAX machine 7, these machines are called with ringing.

During paging or ringing the caller hears a ringing tone generated by the tone generator 13 under control of microprocessor 17.

When the call is answered by one of the telephone apparatus 5, 6 or 7, the connection with that telephone apparatus 5, 6 or 7 is established as described before the tone generator 13 is stopped.

If the caller still did not make a selection, a general call paging message will be sent from the recording and replay unit 15 to the interface units 4.

If a person has been paged several times and the call is not answered, the central unit 2 will page several times with the general call paging message. If again the call is not answered, the central unit 2 will stop paging and will call the answering machine 6 with ringing.

Incoming call with distinctive ringing

When the system is implemented for recognizing different ringing rhytms, it is possible, on the basis of the ringing rhytm received, to immediately make a selection which one of the apparatus 5, 6 or 7 connected to the system should be called. Now the exchange line need only be answered if with one of the apparatus 5, 6 or 7 the receiver has been lifted from the hook.

In such an embodiment of the invention, the tone generator 13, the tone detector 14 and the recording and repeoduction unit 15 can be left out.

Another embodiment of the invention is able to combine the abovementioned variant with and without distinctive ringing. At a certain ringing rhythm a specific person is paged or a telephone apparatus 6 or 7 is called, and with other ringing rhythms the procedure without distinctive ringing is followed.

With a further variant of the invention the interface units 4 further contain a recording and replay unit. The paging messages are not generated by the central unit 2 but are generated directly by the interface units 4. In the page message from the central unit 2 to the interface units 4 is incorporated the audio paging message number that is to be reproduced. The users can record the paging messages in the interface units 4 to their own liking.

### Call transfer

The user has the possibility to transfer an incoming or outgoing call with the exchange line 1 to another person or telephone apparatus 6 or 7 by pressing the R-button on the telephone set or by operating the hook switch for a short period, followed by sending a digit that is linked to the person wanted or the telephone apparatus 6 or 7. After this the user replaces the receiver.

In case the transmission channel 3 is the power line or a radio link the interface unit 4 sends a hookflash message to central unit 2 or the loop, and in case the transmission channel 3 is the two-wire telephone cabling, ringtrip detector 327 detects the hookflash. The central unit 2 disconnects the audio connection between the exchange line 1 and the transmission channel 3 and switches the tone generator 3 and the DTMF receiver 16 on the transmission channel 3. The dial tone generated by the tone generator 13 invites the user to dial a digit. The central unit 2 changes the dial tone into a busy tone and the user is supposed to replace the receiver. The central unit 2 now deals with the call as an incoming call as described before, where the caller on the exchange line 1 had made the selection. If the user replaces the receiver without having dialled a digit, the call in dealt with as an incoming call, whereby the caller on the exchange line 1 had not dialled a digit (general call paging).

A refinement of this procedure is possible in case the transmission channel 3 is the two-wire telephone cabling. After the hookflash, the central unit 2 sends a message to all other interface units 4 to connect their loudspeakers to the line. The user can now announce the call through the loudspeakers of the other interface units 4 and when the call is answered on another telephone, the users have the possibility to have an internal conversation. As soon as one of the internal parties replaces the receiver, the central unit 2 re-connects the exchange line 1 to the transmission channel 3.

### Programming of the system

For setting certain parameters in the system and for recording of audio messages the following procedure is given as an example. In principle, programming can be done from all telephone apparatus 5.

The user lifts the receiver from one of the telephone apparatus 5 and immediately gives a hookflash by pressing the R-button or by operating the hookswitch. If this hook-flash is received by the central unit 2 within a predetermined time, for example 10 seconds, after lifting the receiver, exchange line 1 is released again and the central unit 2 will send a dial tone to the telephone by means of tone generator 13. By means of number codes the user can change parameter setting in the system or start the recording of audio messages in recording and replay unit 15. For example, the user can tell the system to which interface units 4 a normal telephone set 5, an answering machine 6 or a FAX machine 7 is connected, what "links" there are between the selection digits and the persons to be paged. The welcome message and the paging messages can be recorded and replayed for verification.

### Intercom

An intercom function is only possible with the embodiment of the invention where the cabling 3 is the existing telephone cabling.

The user proceeds as if he wants to program the system, as described above. After dialling the number code defined for the intercom function, a call can be made to another apparatus, as described above under Call Transfer, whereby in this case exchange line 1 is not in use. The system may, depending on the number code used ring the answering machine 6, the FAX machine 7, page a person using the paging messages recorded in the recording and replay unit 15 or the user can directly speak a paging message via his telephone set and the transmission channel 3 to the loudspeakers in the other interface units 4.

When the call is answered, a two-way connection between the two parties is established.

## Claims

1. A home telephone system, comprising a central unit (2), to be connected to a telephone line (1) of a public exchange or a PABX, and a number of interface units (4) to which telephone sets (5), an answering machine (6) and a FAX machine (7) can be connected, the central unit (2) and the interface units (4) being connected by a transmission channel (3), being the power line, a radio link, a two-wire telephone cable to which the interface units (4) are connected in parallel, or a plurality of two-wire telephone cables to which the interface units (4) are connected individually, the central unit (2) containing a ring detection circuit (8) to be connected to the exchange line (1), a switching unit (9) for seizing the exchange line (1), a hybrid circuit (10) for splitting and combining the audio signals coming from the exchange line (1) and going to the exchange line (1), a switching unit (11) for switching audio signals, a tone generator circuit (13) for sending tones to the exchange line (1) or to the transmission channel (3), a tone detection circuit (14) for detection of FAX Calling tones coming from the exchange line (1), a DTMF receiver (16), a microprocessor (17) and an interface circuit (12) for interfacing to the transmission channel (3), and each interface unit (4) containing at least an interface circuit (18) to the transmission channel (3), a switch unit (19) and a microprocessor (20), **characterized in that** in the central unit (2) there are further provided an audio recording and reproduction unit (15) for the reproduction of an audio welcome message to the exchange line (1) and audio paging messages to the transmission channel (3), and the interface units (4) further contain loudspeakers for outputting said audio paging messages from the transmission channel (3), all built and interconnected in such a way that ringing signals on the exchange line (1) can be detected, the exchange line (1) can be seized, a FAX Calling tone on the exchange line (1) can be detected, DTMF signals on the exchange line (1) can be detected, an audio welcome message, recorded in the recording and reproduction unit (15) can be reproduced on the exchange line, one or more telephone apparatus (6, 7), can be called, audio paging messages, recorded in the recording and reproduction unit (15) can be sent via the transmission channel (3) to the interface units (4), where they are output through a loudspeaker (21), after the receiver of one of the telephone apparatus (5, 6, 7) has been lifted an audio connection between the exchange line and that telephone apparatus can be established, and impulse signals generated by the telephone apparatus (5, 6, 7) can be re-generated by the system on the exchange line (1).

2. A home telephone system according to claim 1, **characterized in that** the interface units (4) are equipped with a recording an reproduction unit and that instead of reproducing audio paging messages from the central unit (2), audio paging messages from said recording and reproduction units in the interface units (4) can be reproduced via the loud-speakers (21).

3. A home telephone system according to claims 1 or 2, **characterized in that** audio signals coming directly from a telephone apparatus (5, 6, 7) can be reproduced via one or more of the loudspeakers in the interface units (4).

4. A home telephone system according to claims 1, 2 or 3, **characterized in that** the interface units (4) are built into a telephone, a cordless telephone, an answering machine, a FAX machine or any combination of said pieces of telephone equipment.

5. A method of handling an incoming call by a home telephone system, **characterized** by the following steps:
- after recognition of a valid ringing signal on the exchange line, the exchange line is seized and a tone detector and a DTMF receiver are connected to the exchange line and the system listens for a DTMF digit or a FAX Calling tone (CCITT CNG tone);
- if a FAX Calling tone is recognized, a ringing message is sent to the interface unit to which the FAX machine is connected;
- if a DTMF digit is received and the digit is "linked" to the answering machine or the FAX machine, the answering machine or the FAX machine is called;
- if a DTMF digit is received and the digit is "linked" to a person, a paging message for that person is reproduced via the loudspeakers of all interface units;
- if neither a FAX Calling tone, nor a DTMF digit is received, the tone detector is removed from the exchange line and the audio recording and reproduction unit is connected to the line and an audio welcome message contained therein is replayed, after which the caller can still make a selection by means of sending a DTMF digit;
- if the caller still makes no selection, a general call paging message will be reproduced via the loudspeakers of all interface units;
- during ringing the answering machine or the FAX machine and during paging a person, the caller hears a ringing tone;
- when the receiver of one of the telephone apparatus is lifted during ringing or paging, the audio connection with that telephone apparatus is established and the sending of the ringing tone is stopped;
- when a paging message has been sent several times, without the call being answered, the general call paging message is reproduced via the loudspeakers of the interface units;
- when the general call paging is not answered, the answering machine is called;
- when again the call is not answered, the exchange line is disconnected and the incoming call abandoned.

6. A method of handling an incoming call by a home telephone system where the rhythm of the ringing signal is used to select person that is to be paged or the telephone apparatus that is to be called ("distinctive ringing"), **characterized** by the following steps:
- after recognition of a valid ringing signal rhythm on the exchange line, the person, answering machine or FAX machine that is "linked" to that ringing rhythm is paged or called; if no valid rhythm is detected the method as described in claim 5 is followed;
- when the receiver of one of the telephone apparatus is lifted, the incoming call on the exchange line is answered and the call is connected to that telephone apparatus;
- when the paging message has been sent several times, without the call being answered, the general call paging message is reproduced;
- when the general call paging is not answered, the answering machine is called;
- paging of persons or ringing of telephone apparatus is stopped when the ringing signal on the exchange line stops before the call is answered.

7. A method according to claim 5 for a system where the interface units contain recording and reproduction units, **characterized** in that
- the audio paging messages are generated by the recording and reproduction units in the interface units;
- a page message containing the number of the audio paging message to be reproduced is sent from the central unit (2) to the interface unit (4).
